# EUROPÄISCHE PATENTANMELDUNG

(11) **EP 2 289 314 A1**
(43) Veröffentlichungstag der Anmeldung: **02.03.2011**
(21) Anmeldenummer: 09168611.3
(22) Anmeldetag: 25.08.2009
(51) Int. Cl.: A01K 97/12

(54) **Vorrichtung zum Anordnen einer Angeleinrichtung**

(71) Anmelder: Huisman, Aant Cornelis, 6373 Ennetbürgen (CH)
(72) Erfinder: Huisman, Aant Cornelis, 6373 Ennetbürgen (CH)
(74) Vertreter: Irniger, Ernst

(57) **Zusammenfassung**

Eine Vorrichtung zum Anordnen einer Angeleinrichtung wie insbesondere einer Angelrute (33) und zum Erfassen des Anbeissens eines Fisches, ist gekennzeichnet durch eine festpositionierbare Aufnahme (3) um die Angeleinrichtung in weitgehendst aufrechter Position zu positionieren. Weiter vorgesehen ist ein Sensor (27) welcher mit der Angelschnur oder Fischleine (35) derart wirkverbunden ist, dass ein Anziehen der Schnur oder Leine und deren Straffen oder eine Rückwärtsbewegung und entsprechendes Durchhängen der Schnur oder Leine erfasst wird, um ein Signal auszulösen.

## Beschreibung

Die vorliegende Erfindung betrifft eine Vorrichtung zum Anordnen einer Angeleinrichtung mit einem Sensor zum Erfassen des Anbeissens eines Fisches, gemäss dem Obergriff nach Anspruch 1 sowie ein Verfahren zum Erfassen des Anbeissens eines Fisches.

Stationäres Fischen von insbesondere grösseren Fischen erfolgt oft von einem Boot aus und gelegentlich auch nachts. Dabei wird die Angelrute fest positioniert und die Fischleine oder Angelschnur mittels beispielsweise einer sogenannten Reissleine positioniert. Insbesondere nachts ist es oft schwierig zu erkennen, wenn ein Fisch angebissen hat. Akustische Hilfen, wie Rätschen, Glocken, etc. haben den Nachteil, dass sie auch bei Schiffsbewegungen infolge Wellengang aktiviert werden.

Es ist deshalb eine Aufgabe der vorliegenden Erfindung eine Vorrichtung zum Anordnen einer Angeleinrichtung, wie insbesondere einer Angelrute zu schaffen, mittels welcher das sogenannte Anbeissen eines Fisches zuverlässig erfasst und angezeigt wird.

Erfindungsgemäss wird eine Vorrichtung gemäss dem Wortlaut nach Anspruch 1 vorgeschlagen.

Vorgeschlagen wird, dass die Vorrichtung zum Anordnen einer Angeleinrichtung wie insbesondere einer Angelrute und zum Erfassen des Anbeissens eines Fisches eine festpositionierbare Aufnahme aufweist, um die Angeleinrichtung im weitgehendst aufrechter Position zu positionieren, und dass im Weiteren ein Sensor vorgesehen ist, welcher mit der Angelschnur bzw. Fischleine der Angeleinrichtung derart wirkverbunden ist, dass ein Anziehen der Schnur oder Leine und deren Straffen oder eine Rückwärtsbewegung und entsprechend ein Durchhängen der Schnur oder Leine erfassbar ist und ein Signal auslösbar ist.

Beim Sensor handelt es sich beispielsweise um einen sogenannten Bewegungssensitiven Sensor, derart, dass beim vorwärts oder rückwärts Bewegen der Schnur oder Leine, ein Signal auslösbar ist. Derartige bewegungssensitive Sensoren können beispielsweise sogenannte Neigeschalter sein, welche auf Veränderung der Neigung des Sensors ansprechen.

Der Sensor kann beispielsweise in einer Einrichtung angeordnet sein, welche einen Führungsabschnitt für die Angelschnur oder Leine aufweist, wobei die Führung derart ist, dass beim Anziehen oder Straffen der Schnur diese aus der Führung gezogen wird, oder diese verlässt und dass die Einrichtung weiter ein Gewicht aufweist, welches die Einrichtung und damit verbunden den Sensor nach unten zieht, wodurch infolge des nach unten Kippens des Sensors, wie beispielsweise eines Neigeschalters, das Signal ausgelöst wird.

Weiter vorgeschlagen wird eine Halterung für die Angeleinrichtung beabstandet von der Aufnahme und mit dieser vorzugsweise verbunden für das feste Positionieren der Angeleinrichtung wie der Angelrute. An der Halterung sind vorzugsweise Beleuchtungsmittel vorgesehen, um die Spitze der Angelrute und andererseits den Sensor zu beleuchten. Gemäss einer Ausführungsvariante, handelt es sich dabei um sogenannte LED Leuchten.

Um eine unterschiedliche Positionierung der Angeleinrichtung, wie insbesondere der Angelrute zu ermöglichen, wird weiter vorgeschlagen, die Aufnahme vorzugsweise allseitig schwenkbar oder kippbar auszubilden, um beispielsweise bei Krafteinwirkung auf die Angeleinrichtung beispielsweise beim Anbeissen eines Fisches, ein verkannten der Angeleinrichtung in der Aufnahme zu verhindern.

Schliesslich wird vorgeschlagen, dass in der Vorrichtung, wie beispielsweise im Bereich der Aufnahme, Anzeigen oder Signalmittel vorgesehen sind, wie beispielsweise ein akustisches oder ein visuelles Signal, welches mit dem Sensor derart wirkverbunden ist, dass beim Anbeissen eines Fisches ein entsprechendes Signal oder ein Alarm ausgelöst wird.

Weitere bevorzugte Ausführungsvarianten der Erfindung sind in abhängigen Ansprüchen charakterisiert.

Weiter vorgeschlagen wird ein Verfahren zum Anzeigen des Anbeissen eines Fisches an einer Angeleinrichtung wie einer Angelrute, **dadurch gekennzeichnet, dass** die Angelschnur oder Fischleine durch eine Führung geführt wird und beim Anziehen bzw. Spannen der Angelschnur oder bei einer Rückwärtsbewegung und einem Durchhängen der Angelschnur, ein mit der Führung verbundener Sensor, wie beispielsweise ein Neigeschalter aktiviert wird. Durch die Aktivierung des Sensors wird ein mit diesem wirkverbundenes, akustisches oder visuelles Signal aktiviert, um das Anbeissen anzuzeigen.

Vorgeschlagen wird dabei, dass insbesondere beim Anziehen oder Spannen die Schnur oder Leine aus der Führung abgezogen wird, bzw. die Schnur die Führung verlässt und dass durch ein mit der Führung verbundenes Gewicht die Führung zusammen mit dem Sensor infolge Gravitation nach unten treibt, wodurch beispielsweise ein Neigeschalter aktiviert wird und damit verbunden das akustische oder visuelle Signal.

Wiederum weitere bevorzugte Ausführungsvarianten des Verfahrens sind in abhängigen Ansprüchen charakterisiert.

Die Erfindung wird nun beispielsweise und unter Bezug auf die beigefügten Figuren näher erläutert. Dabei zeigen:
Figur 1 schematisch eine erfindungsgemässe Vorrichtung zum Anordnen einer Angeleinrichtung,
Figur 2 die Vorrichtung von Figur 1 mit einer darin angeordneten Angelrute und
Figuren 3a bis 3c schematisch das Erfassen des Anbeissens eines Fisches mittels dem erfindungsgemäss vorgeschlagenen Sensor.

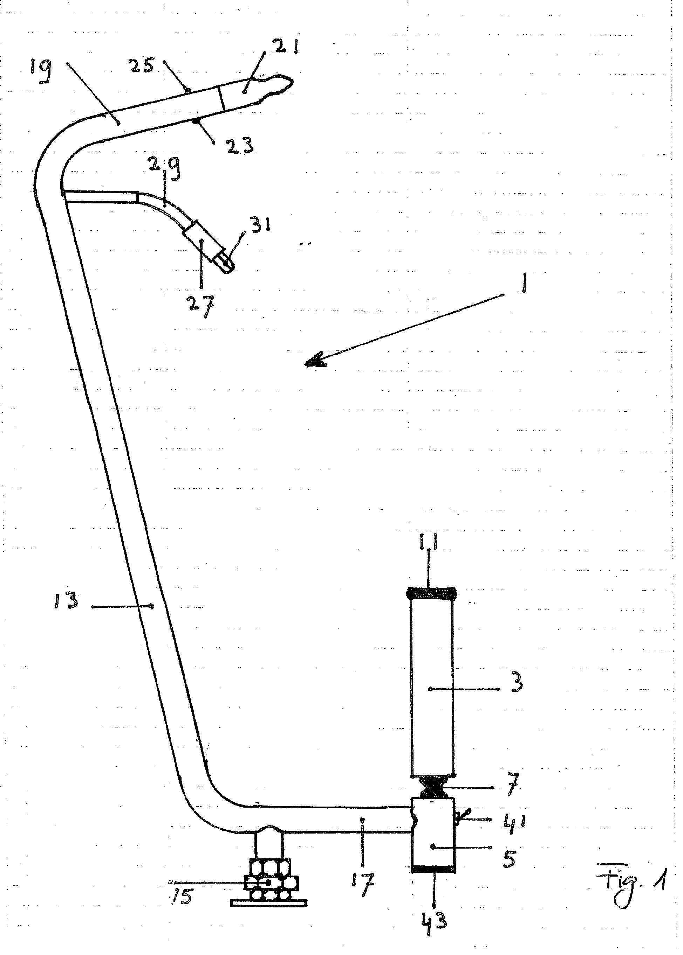

Figur 1 zeigt schematisch eine erfindungsgemässe Vorrichtung zum festen Positionieren einer Angelrute, mittels welcher zuverlässig das Anbeissen eines Fisches erfasst werden kann. Insbesondere für das Fangen grösserer Fische, wie beispielsweise eines Welses, werden Angelruten fest positioniert und zugewartet bis der Fisch anbeisst. Dies kann beispielsweise auf einem Schiff erfolgen und während der Nacht, wo das Erfassen des Anbeissens besonders schwierig ist, insbesondere dann auch, wenn der Angler sich nicht direkt bei der Angelrute aufhält.

Die erfindungsgemässe Vorrichtung kann beispielsweise über einen Montagefuss 15 fest auf dem Boden eines Schiffes montiert sein. Dabei ist es möglich, dass ein Sockel fest, beispielsweise auf dem Boden des Schiffes, montiert ist und eine Schraube aufweist, über welche mittels einer sogenannten Überwurfmutter die Vorrichtung fest angeordnet werden kann. Auf diese Weise, kann die Vorrichtung schnell demontiert und an einem anderen Ort wieder fest angeordnet werden. Selbstverständlich kann die erfindungsgemässe Vorrichtung auch an einer Bootswand oder an Land, beispielsweise bei einer Bootshütte, fest angeordnet werden, indem beispielsweise jeweils ein Sockel vorgesehen ist, bei welchem mittels der genannten Überwurfmutter die Vorrichtung angeordnet werden kann.

Die Vorrichtung weist weiter eine Aufnahmehülse 3 auf, welche oben eine Öffnung 11 aufweist, welche derart dimensioniert ist, dass gängige Angelruten darin positioniert werden können. Vorzugsweise über eine flexible Manschette 7 ist die Aufnahmehülse 3 mit einem Grundkörper 5 verbunden um zu ermöglich, dass eine Angelrute auch beispielsweise in leicht angewinkelter Position aufrecht in der Hülse 3 angeordnet werden kann. Die flexible Manschette kann derart sein, dass sie eine Rückstellkraft aufweist derart, dass die Aufnahmehülse im Ruhezustand weitgehendst senkrecht nach oben verlaufend positioniert wird.

Sowohl Montagefuss 15 wie auch Basiskörper 5 und Aufnahmehülse 3, sind an einem Basisteil 17 eines Halterohres 13 angeordnet, welches an seinem oberen Ende einen weiteren angewinkelten Schenkel 19 aufweist mit endständig einem sogenannten Halteclip 21 für das Positionieren der Angelrute. Ebenfalls im Bereich dieses oberen angewinkelten Schenkels 19 sind Beleuchtungskörper 23 und 25 vorgesehen, um einerseits nach oben die Spitze der Angelrute bei Nacht zu beleuchten und nach unten einen Fischleinenclip 27 für das Halten und Führen der Fischleine oder der Angelschnur. Dieser Clip 27 weist an seinem FrontEnde eine Führung 31 auf, auf deren Funktion später zurückgekommen wird. Schliesslich ist der Clip 27 über eine Verbindung 29 mit dem Halterohr 13 verbunden.

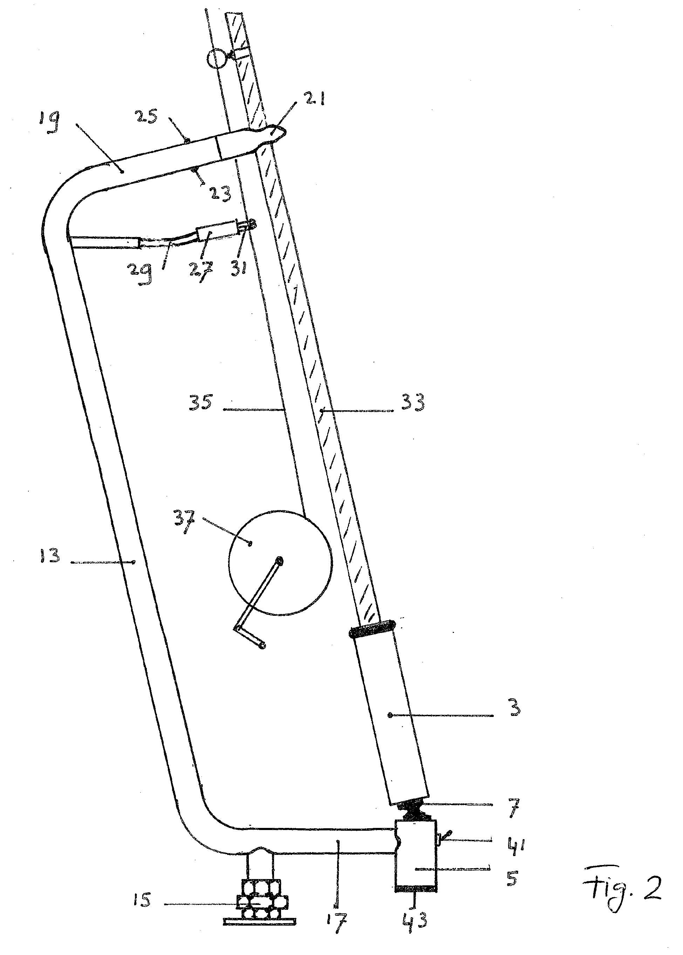

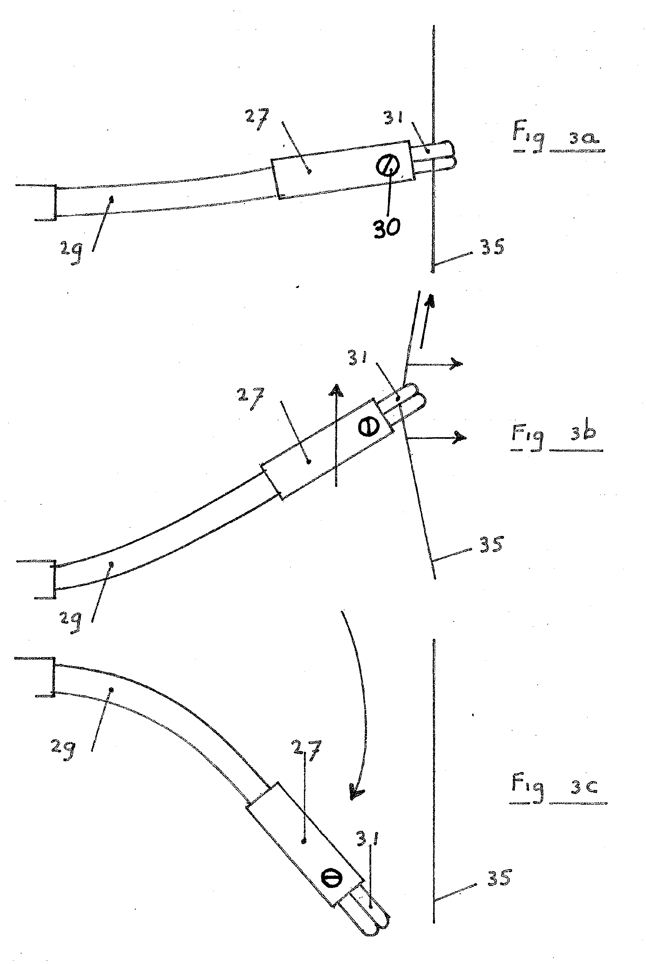

Figur 2 zeigt schematisch das Anordnen einer Angelrute 33 in einer Vorrichtung, wie dargestellt in Figur 1. Die Angelrute 33 ist mit ihrem hinteren Ende in der Hülse 3 eingesteckt und leicht angewinkelt positioniert, was infolge der flexiblen Verbindung 7 mit dem Basiskörper 5 möglich ist. Die Fischleine oder Angelschnur 35 wird von einer Rolle 37 mit Bedienungshebel für das Fischen abgewickelt. Sowohl Angelrute 33 wie auch Fischleine oder Angelschnur 35 sind am oberen Schenkel 19 des Verbindungsrohrs 13 im Halteclip 21 gehalten bzw. geführt. Weiter wird die Fischleine 35 in der Führung 31 gehalten, welche beispielsweise einen derart dimensionierten feinen Spalt aufweist, dass die Leine darin zuverlässig gehalten ist. Im Fischleinenclip 27 ist weiter ein Sensor vorgesehen, mittels welchem das Anbeissen eines Fisches erfasst werden soll. Bei diesem Sensor handelt es sich beispielsweise um einen Neigesensor oder Neigeschalter, auf dessen Funktionsweise unter Bezug auf die nachfolgenden Figuren 3a bis 3c näher eingegangen wird. Der Sensor im Clip 27 ist über die Verbindung 29 und das Rohr 13 mit einer entsprechenden elektronischen oder elektrischen Schaltung im Basiskörper 5 am unteren Rohrschenkel 17 verbunden. Diese elektrische oder elektronische Schaltung kann beispielsweise mittels einem Schalter 41 aktiviert bzw. deaktiviert werden und weiter ist im Basiskörper 5 ein Alarm oder Signalgeber 43 angeordnet, wie beispielsweise ein akustisches und/oder visuelles Signal. Sowohl der Schalter 41 wie auch Alarm- oder Signalgeber können an anderen Teilen der Vorrichtung angeordnet sein und weiter ist es möglich, beispielsweise im Bereich des Montagefusses eine Batterie anzuordnen für die Stromspeisung der elektronischen Schaltung sowie des Alarm- oder Signalgebers, etc. Der Schalter 41 kann beispielsweise zwischen folgenden Positionen schaltbar ausgebildet sein:
- Aus
- Ein, nur Licht aktiviert
- Ein, nur Alarm aktiviert, oder
- Ein, sowohl Licht wie Alarm aktiviert.

Unter Bezug auf die Figuren 3a bis 3c soll nun auf die Funktionsweise des Sensors im Clip 27 näher eingegangen werden.

Figur 3a zeigt die Ausgangssituation beim Anordnen der Angelrute in der Aufnahmehülse 3 und dem Einführen der Angelschnur oder Fischleine 35 in der Führung 31 des Clips 27. Mittels einer Stellschraube 30 kann ein Schlitz in der Führung 31 derart eingestellt werden, dass die Angelschnur bzw. Fischleine 35 mit einer gewissen Reibung in der Führung gehalten wird, dass der Clip nicht entlang der Leine abgleiten kann.

Beim Anziehen, resp. Straffen der Fischleine 35 wie in Figur 3b dargestellt, bewegt sich diese leicht nach oben und damit verbunden auch der Clip 27 mit der Führung 31. Infolge des Straffens und der Bewegung wird die Fischleine oder Angelschnur 35 aus der Führung, wie durch Pfeile angezeigt, herausgezogen, wodurch nun der Clip 27 infolge seines Eigengewichtes nach unten fällt, wie in Figur 3c dargestellt. Dieses nach unten Fallen kann dadurch verstärkt werden, indem der Körper bzw. Clip 27 ein Gewicht enthält oder selbst aus Metall gefertigt ist.

Durch diese Bewegung des Clips 27 von Figur 3a zu Figur 3c, wird nun aber ein Sensor, wie beispielsweise ein Neigeschalter, aktiviert, welcher im Körper des Clips 27 angeordnet ist.

Der Sensor selbst aktiviert über die Verbindung 29 und das Rohr 13 den elektrischen Schaltkreis, welcher im Basiskörper 5 angeordnet ist, wodurch ein akustisches oder visuelles Alarmsignal ausgelöst wird. Nun weiss der Fischer, dass ein Fisch an der Schnur angebissen hat. Selbstverständlich kann die Aktivierung durch den Sensor auch drahtlos erfolgen. Sowohl der Empfänger wie auch der Alarmgeber kann auch entfernt von der Vorrichtung angeordnet sein.

In dem Fall, dass beim Anbeissen eines grossen Fisches, die eingangserwähnte Reissleine reisst, und somit die Fischleine bzw. Angelschnur statt gespannt, entspannt wird und somit im Bereich des Clips 27 rückwärts bewegt wird und die Leine durchhängt, fällt der Clipkörper 27 ebenfalls nach unten, wie in Figur 3c dargestellt, allerdings mit der Leine nach wie vor in der Führung gehalten. Auch in diesem Falle wird der Alarm ausgelöst und der Fischer weiss, ein Fisch hat angebissen.

Schliesslich sei noch erwähnt, dass über einen Schalter 41 die elektronische Schaltung aktiviert bzw. deaktiviert werden kann.

Ein grosser Vorteil der erfindungsgemässen Vorrichtung liegt auch darin, dass die Aufnahmehülse 3 für das Positionieren der Angelrute kippbar bzw. schwenkbar ausgebildet ist. Dies ist insbesondere deshalb vorteilhaft, da beim Anbeissen eines Fisches und damit durch den Zug der Angelleine auf die Angelrute diese in der Aufnahmehülse nicht verkanten kann. Mit anderen Worten, kippt die Aufnahmehülse immer in diejenige Richtung, in welcher sich die Längsachse der Angelrute befindet und somit kann die Angelrute leicht aus der Hülse herausgezogen werden.

Ein weiterer Vorteil der erfindungsgemässen Vorrichtung liegt im Anordnen der erwähnten Beleuchtung bzw. der LED's 23 und 25, indem jederzeit zum Beispiel Bewegungen an der Spitze der Angelrute beobachtet werden können wie auch die Position des Fischleinenclips und damit verbunden des Sensors. Auch eine Beleuchtung der Rolle und/oder des Arbeitsplatzes ist möglich.

Bei dem, unter Bezug auf die Figuren 1 bis 3, beschriebenen Beispiel der erfindungsgemässen Vorrichtung, handelt es sich selbstverständlich nur um ein Beispiel, um die vorliegende Erfindung zu erläutern. Modifikationen, Ergänzungen durch weitere Teile oder auch unterschiedliche Materialwahl ist selbstverständlich möglich. So kann nun beispielsweise auch ein andersartig ausgebildeter Sensor verwendet werden, um ein Anziehen bzw. Straffen oder eine Rückwärtsbewegung der Fischleine oder Angelschnur zu erfassen. Auch muss das Alarmsignal nicht unbedingt in der Basiseinheit angeordnet werden. Auch ist es möglich, den Sensor beispielsweise mit einer entsprechenden Schaltung in der Umgebung oder im Schiff zu verbinden, um beim Anbeissen einen Alarm auszulösen.

## Patentansprüche

1. Vorrichtung zum Anordnen einer Angeleinrichtung (33) wie insbesondere einer Angelrute und zum Erfassen des Anbeissens eines Fisches **gekennzeichnet durch**
- eine festpositionierbare Aufnahme (3) um die Angeleinrichtung (33) in möglichst aufrechter Position zu positionieren, und
- einen Sensor (27) welcher mit der Angelschnur bzw. Fischleine (35) derart wirkverbunden ist, dass ein Anziehen der Schnur oder Leine und deren Straffen oder eine Rückwärtsbewegung und entsprechendes Durchhängen erfassbar ist und ein Signal auslösbar ist.

2. Vorrichtung nach Anspruch 1, **dadurch gekennzeichnet, dass** der Sensor ein Bewegungssensitiver Sensor ist, derart, dass bei Vorwärts-, Straffen- und/oder Rückwärtsbewegung der Schnur oder Leine ein Signal auslösbar ist.

3. Vorrichtung nach Anspruch 2, **dadurch gekennzeichnet, dass** der Sensor ein sogenannter Neigeschalter ist, welcher auf Neigeveränderung anspricht.

4. Vorrichtung nach einem der Ansprüche 1 bis 3, **dadurch gekennzeichnet, dass** der Sensor in einer Einrichtung (27) angeordnet ist, aufweisend eine Führung (31) für die Schnur oder Leine (35), wobei die Führung derart ist, dass bei Anziehen der Schnur diese aus der Führung gezogen wird, bzw. die Schnur oder Leine die Führung verlässt und dass die Einrichtung weiter ein Gewicht aufweist, welches die Einrichtung nach Entfernung der Schnur oder Leine aus der Führung nach unten zieht, wodurch infolge Neigeveränderung das Signal auslösbar ist.

5. Vorrichtung, insbesondere nach einem der Ansprüche 1 bis 4, **dadurch gekennzeichnet, dass** weiter eine Halterung (21) für die Angeleinrichtung (33) beabstandet von der Aufnahme und mit dieser verbunden vorgesehen ist, für das Positionieren der Angeleinrichtung, wobei an der Halterung Beleuchtungsmittel (23, 25) vorgesehen sind, derart um beispielsweise die Spitze der Angeleinrichtung und den Bereich des Sensors bzw. der Einrichtung beinhaltend den Sensor, die Rolle und/oder den Arbeitsplatz, zu beleuchten.

6. Vorrichtung nach Anspruch 5, **dadurch gekennzeichnet dass** es sich bei den Beleuchtungsmitteln um sogenannte LED Leuchten handelt.

7. Vorrichtung, insbesondere nach einem der Ansprüche 1 bis 6, **dadurch gekennzeichnet, dass** die Aufnahme vorzugsweise allseitig federnd kippbar bzw. schwenkbar ausgebildet ist, um bei Krafteinwirkung auf die Angeleinrichtung beispielsweise beim Anbeissen eines Fisches ein Verkanten der Angeleinrichtung in der Aufnahme zu verhindern.

8. Vorrichtung nach einem Ansprüche 1 bis 7, **dadurch gekennzeichnet, dass** eine elektrische oder elektronische Schaltung vorgesehen ist, welche aktivierbar bzw. deaktivierbar ist und welche sowohl mit dem Sensor wie auch mit einem akustischen und/oder visuellen Alarmsignalgeber verbunden ist, derart, dass bei Erfassen des Anbeissens eines Fisches durch den Sensor der Alarm auslösbar ist.

9. Verfahren zum Erfassen des Anbeissens eines Fisches an einer Angeleinrichtung, **dadurch gekennzeichnet, dass** mit der Fischleine oder Angelschnur ein Sensor wie beispielsweise ein Neigeschalter derart wirkverbunden ist, dass beim Anziehen bzw. Spannen der Leine oder Schnur oder bei Rückwärtsbewegung und Durchhängen der Leine oder Schnur der Sensor betätigt wird und durch den Sensor ein Alarm wie beispielsweise ein akustisches und/oder visuelles Signal ausgelöst wird, um das Anbeissen des Fisches anzuzeigen.

10. Verfahren nach Anspruch 9, **dadurch gekennzeichnet, dass** die Leine oder Schnur durch eine Führung geführt ist, welche mit dem Sensor verbunden ist und dass beim Anziehen oder Spannen der Schnur diese aus der Führung gezogen wird, worauf die Führung zusammen mit dem Sensor infolge Gravitation nach unten fällt und der Sensor aktiviert wird, worauf der mit dem Sensor verbundene Alarm wie ein akustisches und/oder visuelles Signal ausgelöst wird.
